(19) Europäisches Patentamt
European Patent Office
Office européen des brevets

(11) **EP 2 583 417 B1**

(12) **EUROPEAN PATENT SPECIFICATION**

(45) Date of publication and mention
of the grant of the patent:
**29.08.2018   Bulletin 2018/35**

(21) Application number: **10853042.9**

(22) Date of filing: **18.06.2010**

(51) Int Cl.:
***H04L 29/08*** (2006.01)          ***H04L 29/14*** (2006.01)
***G06F 9/50*** (2006.01)

(86) International application number:
**PCT/CN2010/000886**

(87) International publication number:
**WO 2011/156932 (22.12.2011 Gazette 2011/51)**

(54) **SERVER CLUSTER**

SERVER-CLUSTER

GRAPPE DE SERVEURS

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**24.04.2013   Bulletin 2013/17**

(73) Proprietor: **Nokia Solutions and Networks Oy
02610 Espoo (FI)**

(72) Inventors:
• **FU, Bin
  Beijing 100016 (CN)**
• **MAO, Fengyu
  Beijing 100016 (CN)**
• **WANG, Yongming
  Beijing 100016 (CN)**

• **ZHANG, Ruoyuan
  Beijing 100016 (CN)**

(74) Representative: **Borgström, Markus et al
Nokia Solutions and Networks GmbH & Co. KG
T&I IPR Patent Administration
St.-Martin-Straße 76
80240 München (DE)**

(56) References cited:
**CN-A- 1 859 313          JP-A- 2009 187 090
US-A1- 2004 243 650**

• **LI HUI: 'The Research and Realization of Server
  Load Balancing' DALIAN MARITIME UNIVERSITY
  March 2003, pages 10 - 36, XP008170533**

**Description**

The invention is directed to clusters of servers. In particular, the invention is directed to load balancing in computer server clusters.

JP2009187090 discloses a virtual server installed in a physical server 200 and a virtual server installed in a physical server 300 respectively operate as primary/secondary, and perform the same processing including I/O processing. An LAN switch 120 and an SAN switch 140 transfer data to be transferred to the primary side physical server to the secondary side physical server. A virtual LAN switch and a virtual HBA installed in each physical server transfer data to the destination of the virtual server in the same physical server to the virtual server, and as for data to be output from the virtual server to a storage 160 or an external network 400, when the virtual server operates as a primary, the data is transferred, and when the virtual server operates as a secondary, the data is discarded.

US2004/0243650 discloses a shared-nothing virtual cluster including multiple virtual servers located on a corresponding number of physical servers linked together via a network. The virtual servers collectively form an active/passive (A/P) cluster including an active virtual server and at least one passive server. The shared-nothing virtual cluster further includes an interlink and multiple virtual drives located on the physical servers. The active virtual server handles a cluster load and executes a first operating system that operates the virtual drives in a data redundant configuration that collectively stores a data set for the cluster. Each passive virtual server, when activated, is coupled to a sufficient number of the virtual drives with redundant information to recover the data set for the cluster. The interlink is operatively configured to detect failure of the active server and to initiate promotion of a virtual server to active status to resume handling the cluster load after failover.

In the information technology and telecommunications industries, a system typically receives request messages and performs some processing in response to the requests. Many such systems are designed such that they are scalable. A scalable system enables performance to be increased by adding additional modules to an existing system, rather than designing and implementing a new system with higher performance hardware and software.

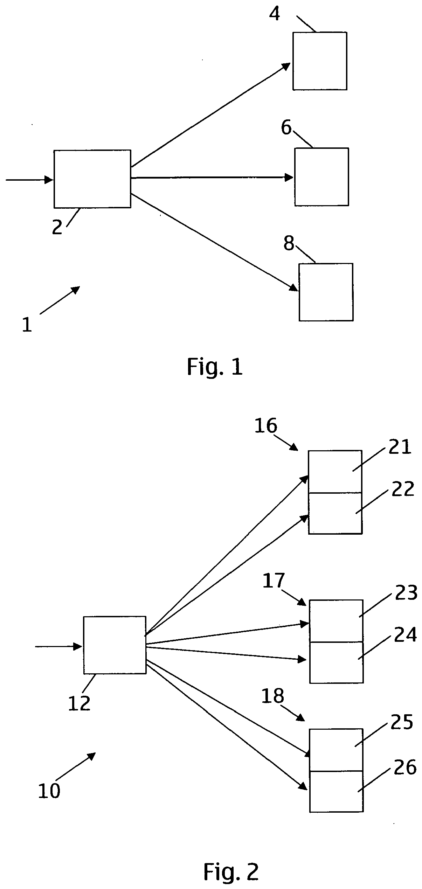

Figure 1 is a block diagram of a load balancing cluster, indicated generally by the reference numeral 1, that is an example of a scalable system. The cluster 1 comprises a scheduler 2, a first server 4, a second server 6 and a third server 8. The number of servers can be increased or reduced, in accordance with the required or desired capacity of the system 1.

In use, the scheduler 2 receives a number of requests. The requests are routed by the scheduler 2 to one or more of the servers 4, 6 and 8. The servers are responsible for the actual service processing required by the service requests (the nature of the servicing of the requests is not relevant to the principles of the present invention).

In order to implement the routing of requests, the scheduler 2 includes a load balancing mechanism that is required to schedule the service requests amongst the servers. The purpose of the load balancing mechanism is to make adequate use of each of the servers 4, 6 and 8 that form the server cluster and to avoid the situation that some of the servers are relatively busy and others are relatively idle. A number of scheduling methods are known in the art, such as random selection, round robin, least busy, etc. The skilled person will be aware of many alternative load balancing algorithms that could be used.

The term "server cluster" is often used to describe servers that are connected by a local network and/or that are physically or logically co-located. In the present specification, the terms "server cluster" and "cluster" are used in a broad sense and should be read to encompass scenarios in which servers are distributed, for example distributed over a wide area network (WAN) or over the Internet.

For stateless applications, such as database queries, the purpose of the scheduler 2 in the system 1 is relatively straightforward, namely to balance the load evenly amongst the servers 4, 6 and 8. In such systems, once an incoming request has been processed by a server, that particular request is complete and no further action is required in relation to that request.

However, for many network applications, a client and server establish some kind of context to maintain the ongoing status during an exchange of multiple requests and responses. At the application level, this context may be called a "session": at the internet protocol (IP) level, this context may be called a "connection". The terms context, session and connection are generally used interchangeably in this specification.

For network applications with contexts, it is more challenging for a cluster (such as the cluster shown in Figure 1) to provide a high-throughput system architecture with scalability, load balancing and high-availability. For example, there could be more than one request belonging to a particular context. When these requests are processed in one or different servers in the cluster, that context should be accessed and modified correctly. In order to achieve the desired load balance, the scheduler 2 needs to consider the accessibility of an involved context for the destination servers when forwarding a request (in addition to considering the relative loads of the servers 4, 6 and 8). Alternatively, the servers could utilize some mechanism to guarantee the accessibility of the context of the request for the scheduled server.

Three methods for implementing a server cluster where applications have context data are described below. In a first method (often referred to as "sticky session") all requests of a particular session should be sent to the same server and that server maintains the session itself. A second method is to duplicate the sessions in one server to all the other servers in the same cluster. Thus, the request could be scheduled to any server for processing. A third method is to enable the servers to use a shared storage to store the session, such as Storage Area Network (SAN). Any server in the cluster could access the session in this shared storage. The requests also could be scheduled to any server, because any server could access the involved session of the request.

In the first (sticky session) method, the servers 4, 6 and 8 are simple, but the scheduler 2 must maintain the session information and differentiate the requests of different sessions. When the number of sessions is very large, the scheduler 2 will be required to be powerful enough to store a table of sessions and to provide a lookup function to identify the session for each request. Since the performance of the servers behind the scheduler may be very high, the scheduler 2 can become a bottleneck in the system 1.

In the second (session duplication) method, the scheduler 2 is simple, since the scheduler does not need to store the context information and just forwards the requests to the servers selected by some simple algorithm (such as one of the random selection, round robin and least busy algorithms mentioned above). However, there are more requirements for the servers 4, 6 and 8. Servers manage the duplication of the sessions between each other, which requires full-mesh duplication. This duplication implies high network bandwidth and computing power overheads. In a high-throughput system, the context information could be huge. Furthermore, the cluster system is not easily scalable due to the required full-mesh duplication.

In the third (shared session) method, the scheduler 2 is simple, but an expensive high performance SAN (not shown in Figure 1) is required to store and manage the session information. For high throughput applications requiring very frequent context modifying, the shared session method with session information may not provide sufficient performance. In such an arrangement, access to the SAN may become a bottleneck in the system 1.

A further problem occurs in the event of a failure of a server within a cluster. In that event, the requests being handled by the server need to be reallocated amongst the other servers in the cluster; this process is handled in the system 1 by the scheduler 2. By way of example, assume that the first server 4 fails. The sessions being handled by the server need to be reallocated to the second server 6 and/or the third server 8. Some simple mechanisms, such as simply using the next available server to handle the sessions can result in one server becoming overloaded in the event of a failure of another server in the cluster.

The present invention seeks to address at least some of the problems outlined above.

The present invention provides apparatus and methods as set out in the independent claims. The invention seeks to provide at least some of the following advantages:

- Achieving high availability for a service provided by a group of servers with low cost
- Fast lookup for request-scheduling with modest memory requirements
- High device utilization ratio
- No expensive storage area network (SAN) media and network required
- Limited session duplication required.

The invention is defined in independent claims 1, 5, 9, 13 and 14. Exemplary embodiments of the invention are described below, by way of example only, with reference to the following numbered schematic drawings.

Figure 1 is a block diagram of a known system for allocating requests amongst a plurality of servers of a cluster;
Figure 2 is a block diagram of a system in accordance with an aspect of the present invention;
Figure 3 shows a virtual server arrangement in accordance with an aspect of the present invention;
Figure 4 shows the virtual server arrangement of Figure 3 in which some of the virtual servers are inoperable;
Figure 5 shows a virtual server arrangement in accordance with a further aspect of the present invention;
Figure 6 shows the virtual server arrangement of Figure 5 in which some of the virtual servers are inoperable;
Figure 7 shows the virtual server arrangement of Figures 5 and 6 in which some of the virtual servers are inoperable.

Figure 2 is a block diagram of a system, indicated generally by the reference numeral 10, in accordance with an aspect of the present invention.

The system 10 comprises a scheduler 12, a first server 16, a second server 17 and a third server 18. The first server 16 comprises a first virtual server 21 and a second virtual server 22. The second server 17 comprises a first virtual server 23 and a second virtual server 24. The third server 18 comprises a first virtual server 25 and a second virtual server 26.

In the system 10, the scheduler 12 is responsible for receiving incoming requests and forwarding the requests to the servers according to some algorithm. The virtual servers 21 to 26 are assigned identities (IDs). The virtual servers 21 to 26 could, in principle, implement any algorithm; the algorithms implemented by the virtual servers 21 to 26 are not relevant to the present invention.

The scheduler 12 forwards requests to the servers 21 to 26, keeping the load of each server balanced. The scheduler should be designed such that the lookup for the destination server should be simple, in order to provide high speed request-forwarding. Similarly, a fast and simple algorithm for selecting a backup server in the event that a server fails should be provided. Algorithms for selecting both a "normal" destination (virtual) server and a backup (virtual) server in the event of a failure of the normal destination server are discussed further below. Finally, the scheduler 12 should not require too much memory.

By way of example, a hash-based lookup may be provided. In a hash-based lookup method, when a request is received at the scheduler 12, the scheduler calculates a hash value based on some identifier of the session, which could be acquired from the request messages, such as client's IP address and port number, client's URL in SIP, TEID in GTP etc. Since each server (or virtual server) is responsible for a range of values in the whole value space, the scheduler will find out which server's range covers this calculated hash value and forward the request to that server.

With a suitable hash function, the uniformity distribution of the hash value could be obtained in the value space. Thus, the value ranges of servers could be selected or even be adjusted to fit the actual processing capability of each server. When measuring the load with the session numbers, the load balancing is achieved by scheduling the requests based on hash values.

As for the detailed lookup method for finding the matching range with a given value, there are many available algorithms that could be used, such as linear search, binary search, self-balancing binary search tree etc.

Another alternative search method is to utilize the hash value of the session identifier as an index to lookup the responsible destination server. We could use the exact hash value as the index and build up a large table to store the corresponding server information for each index value. However, this method is not generally preferred because of the memory requirements. This size of the index table could be reduced if some bits of the index value are ignored. We could, for example, reduce the size of this table by using only some prefix bits in the index.

Using the prefix of hash value is equivalent to partitioning the ID space in small segments, where each entry in that index table represents a segment. The number of prefix bits determines the size of the corresponding segments in the value space. We could call these segments "meta segments". If each server's range only covers one or more meta segments, the task of lookup for the covering range with a given value could become looking up the index table with the hash value as the index, to find the covering meta segment.

In detail, the lookup for the range consists of two steps. The first step is to find the matching meta segment using the hash value of a session identifier as an index. In the second step, the server range corresponding to the meta segment is found. Therefore, another server table is required to store the information of servers. Each entry of a meta segment in the index table will point to the entry representing the covering server range in the server table. Thus, the map from a hash value to some server range may be obtained using two lookup tables.

As described above, each of the servers 16, 17 and 18 is divided into multiple virtual servers. Each of the virtual servers is typically provided with an identity (ID).

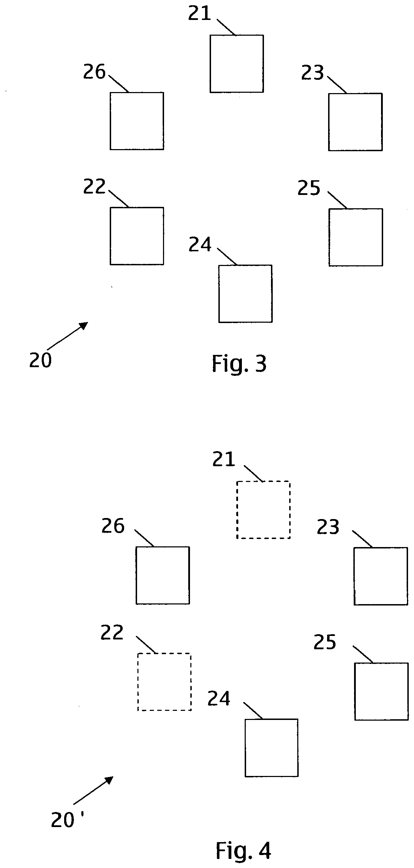

Figure 3 shows an arrangement, indicated generally by the reference numeral 20, of the virtual servers 21 to 26 in a circle. Starting at the top and moving clockwise around the circle of Figure 3, the virtual servers are provided in the following order:

1. The first virtual server 21 of the first server 16.
2. The first virtual server 23 of the second server 17.
3. The first virtual server 25 of the third server 18.
4. The second virtual server 24 of the second server 17.
5. The second virtual server 22 of the first server 16.
6. The second virtual server 26 of the third server 18.

In the present invention, a neighbour server is defined as being the next virtual server in the clockwise direction. Thus, virtual server 23 is the neighbour of virtual server 21, virtual server 25 is the neighbour of virtual server 23, virtual server 24 is the neighbour of virtual server 25, virtual server 22 is the neighbour of virtual server 24, virtual server 26 is the neighbour of virtual server 22 and virtual server 21 is the neighbour of virtual server 26.

The present invention duplicates sessions in one server to its next neighbour server. With neighbouring servers defined, the processing of a session with a particular server (or virtual server) can readily be taken over by the neighbouring server in the event of a failure of a first server. This failover requires the scheduler to forward the requests to the right destination during this failure period.

Of course, a neighbouring server could be defined in other ways. The key point is that it must be easy of the scheduler 12 to determine a neighbour for a particular server.

When using the neighbour as the backup, there exists a potential for an overload condition to occur. If a first server A fails, the requests it processes will be delivered to server A's backup server, say server B. So server A's load will be added to server B's load. The simplest mechanism to guarantee that server B is not overloaded is to ensure that the normal load of servers A and B before failure is less than 50% of the full capacity of those servers (assuming similar capacities for those servers). This, of course, wastes substantial capacity. The use of multiple virtual servers and the arrangement shown in Figure 3 improves this situation, as described below.

Figure 4 shows an arrangement, indicated by the reference numeral 20', of the virtual servers 21 to 26 distributed in a circle. The arrangement 20' differs from the arrangement 20 described above with reference to Figure 3 in that the server 16 is not functioning. The virtual servers 21 and 22 (which are provided by the physical server 16) are therefore not functioning and are shown in dotted lines in the arrangement 20'.

According to the neighbour principle described above, the requests that would have been made to the virtual server 21 will now be routed to the virtual server 23 (the next virtual server moving clockwise around the arrangement 20). The requests that would have been made to the virtual server 22 will now be routed to the virtual server 26 (the next virtual server moving clockwise around the arrangement 20). This routing is handled by the scheduler 12. Of course, as neighbours, the virtual servers 23 and 26 will already have received context data relevant to the servers 21 and 22 respectively.

The virtual server 23 is part of the second server 17 and the virtual server 26 is part of the third server 18. Accordingly, the requests that would have been made to the virtual servers of the server 16 are split between the virtual servers of the servers 17 and 18. Thus, in this situation, each functioning physical backup server would not take over too much load from the failed server. If each physical server keeps its load about 60%, when the load of the failed server is added to the load of its backup server, the total load is about 90% (assuming similar capacities and loads for the servers).

In principle, more virtual servers per physical server could be used to further distribute the load of failed server to more other physical servers. Therefore, the allowable load for each server in normal situation could be raised further.

When a server (such as the server 16) fails, the scheduler 12 should react quickly to forward the requests of server (or the virtual servers of that physical server) to its backup neighbour server. Here, the servers are virtual servers or could be considered as just server IDs.

With a linear range search algorithm, if a request is found to match a particular server range, which is now not reachable, the scheduler should just move one entry down in the linear table to get the information of for the failed server's neighbour. We assume the information of servers is placed in the increasing order of responsible ranges.

With binary search and index table search algorithms, the information of servers could be placed in a server table, whose entries are in the order of the ranges. The result of the lookup is the pointer to the appropriate entry in the server table. Therefore, incrementing the final pointer value after the search for the request should get the entry of the neighbour server.

Of course, other algorithms are possible.

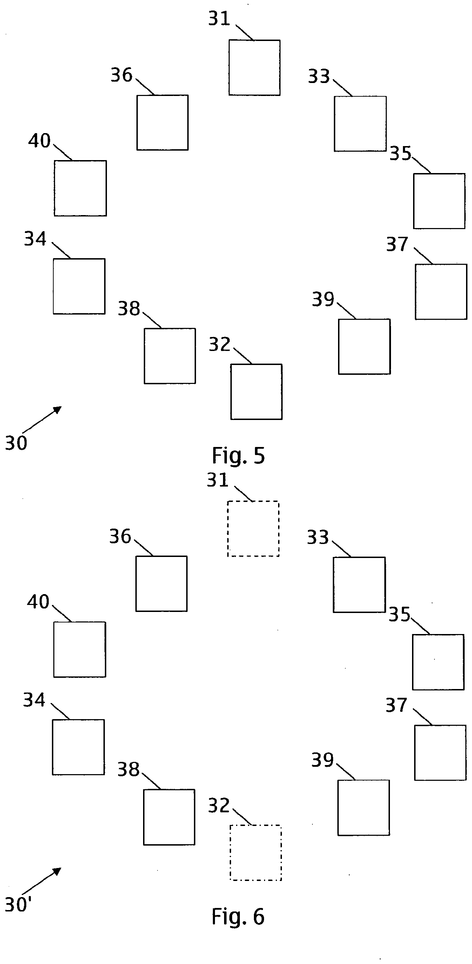

As described above with reference to Figure 4, the present invention provides an arrangement in which, for all virtual servers of any physical server, the backup neighbours should belong to different other physical servers. This ensures that if a physical server fails, the load of the virtual servers provided by the failed physical server is split between multiple backup servers. Figure 5 shows an arrangement, indicated generally by the reference numeral 30, in which this condition is met and a further condition is also met. That further condition is the requirement that when any one physical server fails, for the virtual servers of any physical server that is left, the backup neighbours should also belong to different other physical servers.

The arrangement 30 shown in Figure 5 comprises a first virtual server 31 and a second virtual server 32 of a first server, a first virtual server 33 and a second virtual server 34 of a second server, a first virtual server 35 and a second virtual server 36 of a third server, a first virtual server 37 and a second virtual server 38 of a fourth server and a first virtual server 39 and a second virtual server 40 of a fifth server. The virtual servers 31 to 40 are shown in Figure 5, but the physical servers that provide those virtual servers are omitted for clarity, as is the scheduler.

Starting at the top and moving clockwise around the circle of Figure 5, the virtual servers 31 to 40 are arranged in the following order:

1. The virtual server 31.
2. The virtual server 33 , such that the virtual server 33 is a neighbour of the virtual server 31.
3. The virtual server 35, such that the virtual server 35 is a neighbour of the virtual server 33.
4. The virtual server 37, such that the virtual server 37 is a neighbour of the virtual server 35.
5. The virtual server 39, such that the virtual server 39 is a neighbour of the virtual server 37.
6. The virtual server 32, such that the virtual server 32 is a neighbour of the virtual server 39.
7. The virtual server 38, such that the virtual server 38 is a neighbour of the virtual server 32.
8. The virtual server 34, such that the virtual server 34 is a neighbour of the virtual server 38.
9. The virtual server 40, such that the virtual server 40 is a neighbour of the virtual server 34.
10. The virtual server 36, such that the virtual server 36 is a neighbour of the virtual server 40 and the virtual server 31 is a neighbour of the virtual server 36.

As with the system 10 described above with reference to Figures 2 to 4, the virtual servers 31 to 40 are arranged such that, in the event that any one of the physical servers that provides some of the virtual servers is inoperable, each of the now inoperable virtual servers is backed up by a virtual server of a different physical server.

Figure 6 shows an arrangement, indicated generally by the reference numeral 30'. The arrangement 30' is similar to the arrangement 30 and differs only in that the virtual servers 31 and 32 (which are shown in dotted lines) are inoperable. The virtual servers 31 and 32 are both provided by the first server (not shown) and so the arrangement 30' shows the situation in which the first server is inoperable.

As described above, in the event that a virtual server is inoperable, the neighbour virtual server is used. Accordingly, requests that would have been forwarded to the virtual server 31 are now forwarded to the virtual server 33 and requests that would have been forwarded to the virtual server 32 are now forwarded to the virtual server 38. The virtual server 33 is provided by the second server and the virtual server 38 is provided by the fourth server, and so the load of the now inoperable first server is distributed to two different other servers.

Thus, the arrangement 30 (in common with the arrangement 10) is arranged such that, for all virtual servers of any physical server, the backup neighbours belong to different other physical servers. However, as indicated above, the arrangement 30 goes further, since when any one physical server fails, for the virtual servers of any physical server that is left, the backup neighbours also belong to different other physical servers.

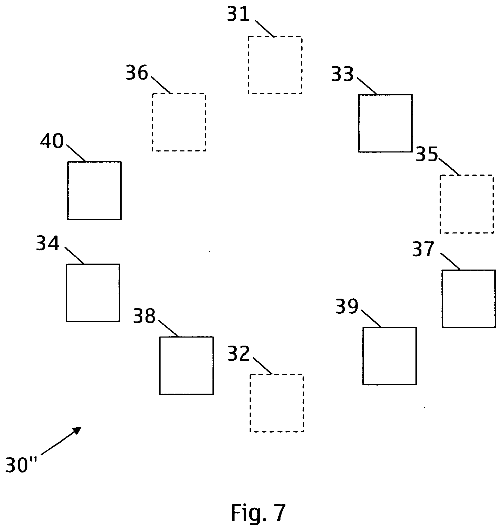

Figure 7 shows an arrangement, indicated generally by the reference numeral 30". The arrangement 30" is similar to the arrangements 30 and 30' and differs only in that the virtual servers 31, 32, 35 and 36 (which are shown in dotted lines) are inoperable. The virtual servers 31 and 32 are both provided by the first server (not shown) and the virtual servers 35 and 36 are both provided by the third server (not shown). Thus, the arrangement 30" shows the situation in which the first and third servers are inoperable.

Accordingly, requests that would have been forwarded to the virtual server 35 are now forwarded to the virtual server 37 and requests that would have been forwarded to the virtual server 36 are now forwarded to the virtual server 33. The virtual server 37 is provided by the fourth server and the virtual server 33 is provided by the second server, and so the load of the now inoperable third server is distributed to two different other servers.

The neighbour principles described above can be generalized, as set out below.

We assume each physical server has N virtual servers and there are $m$ physical servers in total.

The first requirement described above (which is met by both the arrangements 10 and 30) can be specified as follows:

- For all the N virtual servers of any physical server, their backup neighbours should belong to different other $m$ physical servers

The second requirement described above (which is met by the arrangement 30, but is not met by the arrangement 10) can be specified as follows:

- When any one physical server fails, for the N virtual servers of any of the physical servers remaining, the backup neighbours should belong to different other $m$ physical servers.

Sometimes, it is not mathematically possible to meet the second condition. For example, when $N+1=m$, the maximum number of physical servers is involved when failure happens. Thus, the requests requiring backup processing could get the help of all other $N$ living physical servers. Each physical server will only take the minimum amount of extra requests.

When the second condition cannot be met, it can be restated as follows:

- When any one physical server fails, for the N virtual servers of any left physical server, their backup neighbours should belong to different other $m-1$ physical servers. Thus, there are two virtual servers of one physical server that could share the same physical server as backup neighbour.

We list here some examples of virtual server deployment in the circle of ID space. Each of the circumstances meets the first and third requirements described above. Examples having 4, 8 and 16 virtual servers per physical server are described. The solution of virtual server deployment for other combinations of $N$ and $m$ will, of course, be readily apparent to the skilled person.

We use numbers to represent the virtual servers and the value of numbers represents the physical servers. Rows of numbers are used to denote the actual placement of virtual servers in the space circle, which could be considered as placing the rows of numbers one by one along the circle clockwise.

When there are 5 physical servers, we number them from 0 to 4. Since each physical server has 4 virtual servers (such that N+1=m), each value will emerge 4 times. The following table shows one solution meeting the first and third requirements described above.

| 0 | 1 | 2 | 3 | 4 |
|---|---|---|---|---|
| 0 | 3 | 1 | 4 | 2 |
| 0 | 4 | 3 | 2 | 1 |
| 0 | 2 | 4 | 1 | 3 |

For example, if physical server 1 fails, four virtual servers are required to provide backup. In the first row, the backup virtual server belongs to physical server 2. In the second row, the backup virtual server belongs to physical server 4. In the third row, the backup virtual server belongs to physical server 0. In the fourth row, the backup virtual server belongs to physical server 3. We can see all the four backup virtual servers all belong to four different physical servers, as described in the first requirement above. The failure of other physical servers still meets this requirement.

Furthermore, after the failure of physical server 1, the deployment of virtual servers is as following.

| 0 | 2 | 3 | 4 |
|---|---|---|---|
| 0 | 3 | 4 | 2 |
| 0 | 4 | 3 | 2 |
| 0 | 2 | 4 | 3 |

In this situation, the third requirement is met. For example, for physical server 0, its neighbours include 2, 3 and 4, in which there are two virtual servers belonging to physical server 2.

When there are 9 physical servers, numbering from 0 to 8, each physical server has 8 virtual servers, which means there are 8 rows in the table of virtual server deployment. The following table shows one of the possible solutions, meeting the first and third requirements.

| 0 | 1 | 2 | 3 | 4 | 5 | 6 | 7 | 8 |
|---|---|---|---|---|---|---|---|---|
| 0 | 3 | 1 | 5 | 7 | 2 | 4 | 8 | 6 |
| 0 | 7 | 4 | 1 | 6 | 3 | 8 | 5 | 2 |
| 0 | 5 | 3 | 7 | 1 | 8 | 2 | 6 | 4 |
| 0 | 8 | 7 | 6 | 5 | 4 | 3 | 2 | 1 |
| 0 | 6 | 8 | 4 | 2 | 7 | 5 | 1 | 3 |
| 0 | 2 | 5 | 8 | 3 | 6 | 1 | 4 | 7 |
| 0 | 4 | 6 | 2 | 8 | 1 | 7 | 3 | 5 |

For example, when physical server 1 fails, the backup neighbours are from physical servers 2, 5, 6, 8, 0, 3, 4 and 7, respectively in each row.

The virtual server deployment after the failure of server 1 still meets the third requirement, that the further failure of another physical server will leads to requests distribution nearly evenly to the other 7 living servers.

When there are 17 physical servers, each physical server could have 16 virtual servers. The following table shows one of the solutions of virtual server deployment.

| 0 | 1 | 2 | 3 | 4 | 5 | 6 | 7 | 8 | 9 | 10 | 11 | 12 | 13 | 14 | 15 | 16 |
|---|---|---|---|---|---|---|---|---|---|----|----|----|----|----|----|----|
| 0 | 3 | 1 | 5 | 7 | 15 | 13 | 9 | 11 | 6 | 8 | 4 | 2 | 10 | 12 | 16 | 14 |
| 0 | 7 | 4 | 1 | 6 | 14 | 8 | 5 | 2 | 15 | 12 | 9 | 3 | 11 | 16 | 13 | 10 |
| 0 | 5 | 3 | 7 | 1 | 9 | 15 | 11 | 13 | 4 | 6 | 2 | 8 | 16 | 10 | 14 | 12 |
| 0 | 13 | 6 | 15 | 8 | 1 | 10 | 3 | 12 | 5 | 14 | 7 | 16 | 9 | 2 | 11 | 4 |
| 0 | 15 | 5 | 9 | 14 | 11 | 1 | 13 | 7 | 10 | 4 | 16 | 6 | 3 | 8 | 12 | 2 |
| 0 | 11 | 8 | 13 | 2 | 7 | 12 | 1 | 14 | 3 | 16 | 5 | 10 | 15 | 4 | 9 | 6 |
| 0 | 9 | 7 | 11 | 5 | 13 | 3 | 15 | 1 | 16 | 2 | 14 | 4 | 12 | 6 | 10 | 8 |
| 0 | 16 | 15 | 14 | 13 | 12 | 11 | 10 | 9 | 8 | 7 | 6 | 5 | 4 | 3 | 2 | 1 |
| 0 | 14 | 16 | 12 | 10 | 2 | 4 | 8 | 6 | 11 | 9 | 13 | 15 | 7 | 5 | 1 | 3 |
| 0 | 10 | 13 | 16 | 11 | 3 | 9 | 12 | 15 | 2 | 5 | 8 | 14 | 6 | 1 | 4 | 7 |
| 0 | 12 | 14 | 10 | 16 | 8 | 2 | 6 | 4 | 13 | 11 | 15 | 9 | 1 | 7 | 3 | 5 |
| 0 | 4 | 11 | 2 | 9 | 16 | 7 | 14 | 5 | 12 | 3 | 10 | 1 | 8 | 15 | 6 | 13 |

(continued)

| | | | | | | | | | | | | | | | | |
|---|---|---|---|---|---|---|---|---|---|---|---|---|---|---|---|---|
| 0 | 2 | 12 | 8 | 3 | 6 | 16 | 4 | 10 | 7 | 13 | 1 | 11 | 14 | 9 | 5 | 15 |
| 0 | 6 | 9 | 4 | 15 | 10 | 5 | 16 | 3 | 14 | 1 | 12 | 7 | 2 | 13 | 8 | 11 |
| 0 | 8 | 10 | 6 | 12 | 4 | 14 | 2 | 16 | 1 | 15 | 3 | 13 | 5 | 11 | 7 | 9 |

For example, when the physical server 1 fails, the backup neighbours are from physical servers 2, 5, 6, 9, 10, 13, 14, 16, 0, 3, 4, 7, 8, 11, 12 and 17, respectively in each row. There is no duplication in the list of neighbours and it meets the first requirement.

The validation of meeting the third requirement could be performed by eliminating any of numbers in all the rows.

The problem of meeting the requirements for the arrangement of virtual servers as described above can be expressed mathematically, as described in detail below.

A first problem can be defined, wherein there is a set of positive integer numbers whose values are from 1 to m. For each value, there are k numbers, in which k is a positive integer. In total there are $k \times m$ numbers. Those numbers will be placed in a circle. We define the next number of a certain number is along the clockwise, denoted as next(a). It is required to find out the placement of the numbers in the circle, meeting the following requirements:

1. For any number a in the circle, next(a)#a.
2. For any value x from 1 to m, there are no two numbers equal to each other in the set {b | b=next(a), a=x}
3. If k numbers of any same value (from 1 to m) are taken away from the circle, the numbers left in the circle should still meet the requirements 1).
4. These numbers should be placed in the circle as evenly as possible to make the lengths of the segments in the circle (divided by the numbers) are close to each other as much as possible.
5. When new k numbers (with value m) are added in the circle, the places of other numbers wouldn't change and the numbers in the new circle should still meet the above requirements.

This describes a situation that there are m physical servers and each physical server has k peer IDs.

The requirement 1) means, for any virtual node (peer), it and its first successor (peer) are located in different physical servers.

The requirement 2) means, for any two virtual nodes (peers) in a same physical server, their first successors are located in different other physical servers.

The requirement 3) means, even after any one physical server failing, for any virtual node (peer), it and its first successor are still located in different physical servers.

The requirement 4) is about to keep the responsible space segments of peers to be less diverse in terms of segment length.

The requirement 5) asks to support adding new physical server while keeping the other peers' positions not moved.

As second problem can also be defined, which is similar to the first problem, in which there are m integer values from 1 to m, and for each value there are k numbers. The deployment of these numbers in the circle would meet the following requirements:

1. Meet all the requirements 1), 2), 3), 4) and 5) of Problem 1
2. For any value x, y from 1 to m, define X = {b | b=next(a), a=x} and Y = {b | b=next(a), a=y}, if y ∈ X, then x ∉ Y
3. After removal of k same value numbers, if another group of k numbers with same value are removed, the left numbers in the circle should still meet the requirement 1).

Note that the requirement 7) excludes such a case: physical server A backs up part of physical server B's data, while physical server B backs up part of physical server A's data. Note also that the Requirement 8) guarantee that even 2 physical servers break down, for any virtual node (peer), it and its first successor are located in different physical servers.

When one physical server breaks down, for Problem 1 and 2, its workload can be evenly distributed to other k (k<m) physical servers. Especially for Problem 1, when k=m-1, strict load balance in failover (LBIF) can be reached, i.e., all the workload of the failed server will be evenly distributed to all other servers, then the load ratio between different physical servers is (k+1) : (k+1); for other cases, the maximum load ratio between different physical servers is (k+1) : k.

When two or more physical servers break down, it can also keep hype-optimized load balance, and the maximum load ratio between different physical servers is either (k+3) : (k+2), or (k+3) : (k+1), or (k+3) : k depending on k value and Problem 1 or 2, especially for Problem 1, when k=m-1, the maximum load ratio is (k+3) : (k+2).

A Virtual Node ID Allocation for Load Balancing in Failover (VNIAL) algorithm is now described. First we will describe the method to place the numbers in the circle for the special case, i.e., $m$ is a prime number, secondly we will extend it for general case, i.e., no matter $m$ is a prime number or a composite number, then we introduce the method to add new numbers in the circle.

Definition: For a give natural number $m$, nature number $\alpha$ and $\beta$ are conjugate if and only if:

1) $\alpha$ and $m$ are relatively primitive to each other, and

2) $\beta$ and $m$ are relatively primitive to each other, and

3) $\alpha + \beta \equiv m (\bmod m)$

For the special case in which m is a prime number, the first problem is solved as follows.

From the description of the Problem 1, we can easily find that $m > k$. So the following discussion is under the assumption that $m > k$.

From Elementary Number Theory, every prime number (>4) has one or more primitive roots. We assume $r$ is the primitive root of $m$, and define a series of row vectors as follows

$$X_1 = (1, 2, \cdots, m)$$

$$X_i = (x_{i1}, x_{i2}, \cdots, x_{i,m-1}), \quad i = 1, 2, 3, \cdots$$

$$x_{i+1,k} \equiv (x_{i,k}) \times r (\bmod m)$$

Because $r$ is primitive root of $m$, there are only $m-1$ distinctive row vectors, for any $i=1,2,3,...,m-1$, $x_{i,m-1} \equiv m(\bmod m)$, and $x_{1,i}$, $x_{2,i},...,x_{m-1,i}$ is a full permutation of numbers $1,2,...m-1$. This means the maximum of $k$ is $m-1$, we first consider $k=m-1$.

It can be proved that such a placement, sequentially placing $X_i(i=1,2,3,...,m-1)$ along the circle, can meet the requirements of Problem 1, except that requirement of adding new numbers. The algorithm of adding new numbers will be discussed in other sections.

In fact, we could define a series of row vectors

$$V_i = \left( v_{i,1}, \quad v_{i,2}, \quad ..., \quad v_{i,m} \right) \ ,$$

where $v_{i,j} = (i \times j)(\bmod m)$, $i=1,2,,...,m-1$, $j=1,2,...,m$.

Conclusions: It can be proved that

1) $V_i = X_n$, where $i \equiv r^{n-1} (\bmod m)$
2) $v_{i,l} = v_{m-i,m-l}$, where $i,l=1,2,,....m-1$
3) To meet the requirements of Problem 1, $V_i$ can be followed (clockwise) by any other vectors except $V_{m-i}$
4) There are different methods to place those vectors, which can meet the requirements of Problem 1, for example,

$V_1, V_2,...,V_t, V_{m-1}, V_{m-2},...,V_{t+1}$, where $t = \dfrac{m-1}{2}$

5) From each conjugate pair of $V_i$ and $V_{m-i}$, only one is selected, then it can also meet additional requirement 7) for Problem 1, for example $V_1, V_2,...,V_t$

The second problem can be addressed as follows. When $m$ is prime number, $r$ is $m$'s primitive root. We generate $m-1$ different row vectors $X_i$ ($i=1,2,3,...,m-1$) as described in section 0. Because any two values can become neighbors only once, we could obtain that $k \leq \dfrac{m-1}{2}$. Let $t = \dfrac{m-1}{2}$, we can select $t$ vectors from the above $m-1$ vectors and place them along the circle according to certain sequence.

Conclusions: It can be proved that,

1) If neither 2 nor $m$-2 is $m$'s primitive root, sequentially placing the following $t$ vectors along the circle can meet the requirements of Problem 2

$$X_i = (r^{i-1}, 2r^{i-1}, \cdots, mr^{i-1}), \quad i = 1, 2, 3, \cdots, t$$

Here every number is in the sense of MOD operation, which means they are in the scope of [1, m].

2) If 2 or $m$-2 is $m$'s primitive root (m>7), use this primitive room to generate the vectors $X_i$ as above, placing the $t$ vectors along the circle based on the parity as follows can meet the requirements of Problem 2

$$X_1, X_3, \cdots, X_{\left\lfloor \frac{t-1}{2} \right\rfloor \times 2 + 1}, X_2, X_4, \cdots, X_{\left\lfloor \frac{t}{2} \right\rfloor \times 2}$$

3) When $m$=7, the placement of $V_1, V_4, V_2$ along the circle can meet the requirements of Problem 2.

Note that m = 5 is too small and can't meet the requirements of Problem 2 if $k > 1$

Regardless of whether m is a prime number, the first problem can be addressed as follows. For any $m$, all the numbers, from 1 to $m$, relatively primitive to m are $\alpha_1, \alpha_2, \cdots, \alpha_{\varphi(m)}$ ($\alpha_1 < \alpha_2 < ... < \alpha_{\varphi(m)}$). It can be proved that $\alpha_i$ and $\alpha_{\varphi(m)-i}$ are conjugate. Then we have $\varphi(m)$ row vectors

$$V_i = (\alpha_i, 2\alpha_i, 3\alpha_i \cdots, m\alpha_i) \quad i = 1, 2, 3, \cdots, \varphi(m)$$

Conclusions: It can be proved that

1) For any vector $V_i$, there is one and only one vector $V_j$(i.e., $V_{\varphi(m)-i}$), which can not be the next vector of $V_i$ along the circle (clockwise)

2) For any $3 < k \leq \varphi(m)$, the following placement of vectors meets the requirements of Problem 1

$$\begin{cases} V_1, V_2, V_3, \cdots, V_n, V_{\varphi(m)-1}, V_{\varphi(m)-2}, V_{\varphi(m)-3}, \cdots, V_{\varphi(m)-n} & (k = 2n) \\ V_1, V_2, V_3, \cdots, V_n, V_{n+1}, V_{\varphi(m)-1}, V_{\varphi(m)-2}, V_{\varphi(m)-3}, \cdots, V_{\varphi(m)-n} & (k = 2n+1) \end{cases}$$

3) The maximum value of $k$ is $\varphi(m)$

4) If $m$ is a primitive, then $\varphi(m)=m$-1, $\alpha_i=i$ where

$$i = 1, 2, , ..., m-1$$

The second problem can be addressed as follows. Still within the above vector set {$V_i$| i=1,2,...,$\varphi(m)$}, it can be proved that there are $\varphi(m)$/2 vectors and their placement with some certain sequence can meet the requirement of Problem 2. The method of selecting vectors this vector set depends on $m$'s parity.

In each conjugate pair of $\alpha_i$ and $m - \alpha_i$, we only select one of them. In this way, in total there are $\varphi(m)$/2 numbers of $\alpha_i$. We could generate $\varphi(m)$/2 vectors using the selected $\alpha_i$.

$$V_i = (\alpha_i, 2\alpha_i, 3\alpha_i \cdots, m\alpha_i)$$

Now we will discuss separately how to form the right placement of vectors.

- $m$ is even
  It can be proved that any sequence of $\varphi(m)$12 vectors along the circle (clockwise) is allowed for Problem 2.

- *m* is odd

  It can be proved that there exist a sequence of $\varphi(m)/2$ vectors meeting the requirements of Problem 2, when $\varphi(m)/2 \geq 7$. However, we haven't found a specific method to work out the vector sequence. The feasible placement of vectors could be obtained by adding numbers based on a primitive *m* situation, which would be discussed in the next section.

When the problem to place the numbers along the circle to meet the basic requirements of the first and second problems is solved, the next target is to scale out the system by adding new numbers in the settled circle without violating the restriction on neighborhood of numbers. Since there is a perfect solution to arrange these numbers when *m* is a prime number, we could start from this case (*m* is a prime number). If there is a method to add new numbers, any other cases of non-prime-*m* could be solved by adding numbers from a smaller-but-prime-*m* case.

Before further discussion, we generate a (*m*-1)×*m* matrix from $V_i$ (*i*=1,2,3,...,*m*-1) as follows, and call it Basic Generation Matrix.

$$V = \begin{bmatrix} V_1 \\ V_2 \\ V_3 \\ ... \\ V_{m-1} \end{bmatrix} = \begin{bmatrix} v_{1,1}, & v_{1,2}, & v_{1,3}, & ...... & v_{1,m} \\ v_{2,1}, & v_{2,2}, & v_{2,3}, & ...... & v_{2,m} \\ v_{3,1}, & v_{3,2}, & v_{3,3}, & ...... & v_{3,m} \\ ... & ... & ... & ...... & ... \\ v_{m-1,1}, & v_{m-1,2}, & v_{m-1,3}, & ...... & v_{m-1,m} \end{bmatrix}$$

And define a (*m*-1)×*m* matrix

$$\amalg = \begin{bmatrix} 1, & 1, & 1, & ... & 1 \\ 1, & 1, & 1, & ... & 1 \\ 1, & 1, & 1, & ... & 1 \\ ... & ... & ... & ... & 5. \\ 1, & 1, & 1, & ... & 1 \end{bmatrix}$$

We define a (*m*-1)×*m* matrix series as follows

$$A^j = \begin{bmatrix} a_1^j, & a_2^j, & a_3^j, & \cdots, & a_m^j \end{bmatrix} \qquad j = 1,2,3,...$$

Where $a_i^n$ ( $i = 1,2,3,...,m$ ) are (*m*-1)-dimension column vectors, and $A^j = V + (j-1)m\amalg$ . Here we can find $A^1=V$. Actually, $A^j$ is an equivalent matrix to *V* except that every element is added (*j*-1)*m*.

We define $B^j$ is a (*m*-1)×(*m**2^j) matrix (called Generation Matrix) which is generated from the merge of $\{A^j | i=1,2,...,2^j\}$ according the algorithm in this section, and

$$B^j = \begin{bmatrix} Z_1^j, & Z_2^j, & Z_3^j, & ..., & Z_{2^j}^j \end{bmatrix}$$

Where $Z_i^j$ ( $i = 1,2,...,2^j$ ) are (*m*-1)×*m* matrixes.

Algorithm Description - Insert Numbers from m+1 to 2*m*:
As $A^1=V$, adding new numbers from *m*+1 to 2*m* (*m* is a primer number) can be regarded as merging matrix $A^1$ and $A^2$. The approach is as follows:

  1) Insert $a_l^2$ between two columns $a_i^1$ and $a_{i+1}^1$ , where

$$l \equiv \frac{2i+m+1}{2} (\mathrm{mod}\, m)$$

2) Keep $a_m^1$ at the end of the matrix $B^1$

$$B^1 = \begin{vmatrix} a_1^1, & a_2^1, & & \cdots & a_t^1, & a_{t+1}^1, \\ a_{t+1}^1, & \cdots & a_m^1 & & \\ & & & & \\ a_{t+1}^2, & a_{t+2}^2, & \cdots, & a_m^2, & \\ a_1^2, & \cdots, & a_t^2 & & \end{vmatrix}$$

Here $t = \dfrac{m-1}{2}$ . Then

$$Z_1^1 = \left[ a_{t+1}^2, a_1^1, a_{t+2}^2, a_2^1, \quad \cdots, \quad a_t^1, a_m^2, \right]$$

$$Z_2^1 = \left[ a_{t+1}^1, a_1^2, a_{t+2}^1, a_2^2, \quad \cdots, \quad a_t^2, a_m^1, \right]$$

Conclusions: It can be proved that

1) Certain placements of all row vectors of $B^1$ (or $Z_1^1$, or $Z_2^1$ ) can meet the requirements of Problem 1, and certain placements of $t$ row vectors (e.g., row 1,2,...,$t$) can meet the requirements of Problem 2;

2) After removing any numbers from m+1 to 2$m$ for matrix $B^1$, certain placements of all row vectors of the remnant matrix can meet the requirements of Problem 1, and certain placements of $t$ row vectors of the remnant matrix can meet the requirements of Problem 2;

3) For a given $k$, we can select $k$ rows from $B^1$ or the remnant matrix after removing any numbers from m+1 to 2$m$, and place them with the similar method described above for Problem 1 and Problem 2.

Inserting Numbers from 2$m$+1 to 4$m$:

Adding new numbers from 2$m$+1 to 4$m$ ($m$ is a primer number) can be regarded as merging matrixes $Z_1^1$ and $A^3$, and merging matrixes $Z_2^1$ and $A^4$, it follows the similar approach as above

- When merging $Z_1^1$ and $A^3$, insert $a_l^3$ of $A^3$ between two columns $a_i^1$ and $a_j^2$ of $Z_1^1$ (or $B^1$), where

$$l = \begin{cases} [0.5(i+j)](\mathrm{mod}\, m) & \text{if } i+j \text{ is even} \\ [0.5(i+j+m)](\mathrm{mod}\, m) & \text{if } i+j \text{ is odd} \end{cases}$$

- Merging $Z_2^1$ and $A^4$ is similar

- Keep $a_m^1$ at the end of matrix $B^2$ Conclusions: It can be proved that

1) Certain placements of all row vectors of $B^2$, $Z_1^2$, $Z_2^2$, $Z_3^2$ and $Z_4^2$ can meet the requirements of Problem 1 and Problem 2.

2) After removing any numbers from 2$m$+1 to 4$m$ for $B^2$, certain placements of all row vectors of the remnant matrix can meet the requirements of Problem 1, certain placements of $t$ row vectors (e.g., row 1,2,...,$t$) can meet the requirements of Problem 2.

3) For a given $k$, we can select $k$ rows from B$^2$ or the remnant matrix after removing any numbers from $2m+1$ to $4m$, and place them with the similar method above for Problem 1 and Problem 2.

Inserting, numbers from $m*2^n+1$ to $m*2^{n+1}$:

It can be regarded as merge $Z_i^n$ and A$^{i+2n}$, where $i=1,2,3,...,2^n$. It follows the similar approach as above

- Insert $a_l^{i+2^n}$ in $Z_i^n$ between two columns $a_i^p$ and $a_j^q$, where $a_i^p$ and $a_j^q$ are neighbor in matrix $Z_i^n$ (or B$^n$), and

$$l = \begin{cases} [0.5(i+j)](\mod m) & \text{if } i+j \text{ is even} \\ [0.5(i+j+m)](\mod m) & \text{if } i+j \text{ is odd} \end{cases}$$

- Keep $a_m^1$ at the end of the matrix B$^{n+1}$ Conclusions: It can be proved that, if $n \geq 2$,

  1) Certain placements of all row vectors of B$^{n+1}$, $Z_1^{n+1}$, $Z_2^{n+1}$, ..., $Z_{2^{n+1}}^{n+1}$ can meet the requirements of Problem 1 and Problem 2, even more strict requirements.

  2) After removing any numbers from $m*2^n+1$ to $m*2^{n+1}$ *from* B$^{n+1}$, certain placements of all row vectors of the remnant matrix can meet the requirements of Problem 1 and Problem 2.

  3) For a given $k$, we can select $k$ rows from B$^{n+1}$ or the remnant matrix after removing any numbers from $m*2^n+1$ to $m*2^{n+1}$, and place them with the similar method described above for Problem 1 and Problem 2.

Actually, it can be proved that when $m > 2k$, if we have gotten a valid matrix for numbers $0,1,...,m$, the new $k$ copies of numbers $m+1$ can be inserted into the matrix by heuristic search. In another word, there is at least one valid position for the new number $m+1$ in each row vector, the positions of new numbers can be found by search, instead of calculation. So heuristic search is another approach when $m > 2k$.

The concrete steps to build the generation matrix for a non-prime or big prime $M$ is described as follows:

- STEP 1: Find the a prime number $m$, where $m <= M$

- STEP 2: Generate the Basic Generation Matrix

- STEP 3: Expand the matrix as described in section 0.

- STEP 4: Remove elements with value>=M in the generation matrix;

The present invention has generally been described with reference to embodiments in which the number of virtual servers in each of a number of physical servers is the same. This is not essential to all embodiments of the invention.

The present invention has been described with reference to computer server clusters. The principles of the invention could, however, be applied more broadly to peer-to-peer networks. In particular, the invention can be applied in structural peer-to-peer overlays, in which all resources and peers have identifiers allocated in one common hash ID space, each peer is responsible for one area of the space, and takes charge of the resources covered in this area. In one-dimensional DHT, e.g., Chord, the ID space is usually divided into linear segments and each peer is responsible for one segment; in d-dimensional DHT, such as CAN, the d-dimensional space is divided into d-dimensional areas. The requests for a certain resource are routed by the overlay to the destination peer who takes charge of this resource in this overlay.

If any peer fails and leaves from the overlay for some reasons, its responsible area and the resources covered in this area will be taken over by its first valid successor (peer), then all requests destined to it will be routed to and handled by the successor, and its workload will be shifted to this successor. This High Availability feature provided by the overlay could be considered as System Level HA.

The embodiments of the invention described above are illustrative rather than restrictive. It will be apparent to those skilled in the art that the above devices and methods may incorporate a number of modifications without departing from the general scope of the invention. It is intended to include all such modifications within the scope of the invention insofar as they fall within the scope of the appended claims.

**Claims**

1. A method comprising:

   receiving a request;
   selecting a first virtual server (21) to forward the request to, wherein the first virtual server (21) is provided by a first physical server (16) of a plurality of physical servers (16, 17, 18), wherein each of said plurality of physical servers (16, 17, 18) provides a plurality of virtual servers (21-26); and

   in the event that the first virtual server (21) is not able to receive said request, forwarding the request to a backup neighbouring virtual server (23) of said first virtual server (21), wherein the backup neighbouring virtual server (23) of the first virtual server (21) is part of a second physical server (17) that is different to the first physical server (16), wherein a second virtual server (22) of the first physical server (16) has a backup neighbouring virtual server (26) that is provided by a third physical server (18) that is different to the first and second physical servers (16, 17), wherein the first virtual server (21) of the first physical server (16) acts as a backup to said virtual server (26) of the third physical server (18), and wherein the second virtual server (22) of the first physical server (16) acts as a backup to another virtual server (24) of the second physical server (17).

2. A method as claimed in claim 1, wherein, in the event that a physical server is inoperable, each virtual server of the remaining physical servers has a neighbouring virtual server that is provided by a different other physical server.

3. A method as claimed in claim 1, wherein, in the event that a physical server is inoperable, two virtual servers of the remaining physical servers have neighbouring virtual servers that are provided by the same other physical server and any remaining virtual servers each have neighbouring virtual servers that are provided by different other physical servers.

4. A method as claimed in any preceding claim, wherein session information associated with a request is sent to the first virtual server (21) and to the neighbouring virtual server (23) of said first virtual server (21).

5. An apparatus (12) comprising:

   an input for receiving a request;
   an output for forwarding said request to a first virtual server (21), wherein the first virtual server (21) is provided by a first physical server (16) of a plurality of physical servers (16-18), and wherein each of said plurality of physical servers (16-18) provides a plurality of virtual servers (21-26); and
   a processor for selecting said first virtual server (21), wherein, in the event of a failure of said first virtual server (21), the processor is configured to select a backup neighbouring virtual server (23) of the first virtual server (21) and the output of the scheduler is configured to forward said request to said neighbouring virtual server (23) provided by a second physical server (17) that is different to the first physical server (16),
   and wherein a second virtual server (22) of the first physical server (16) has a backup neighbouring virtual server (26) that is provided by a third physical server (18) that is different to the first and second physical servers (16, 17), wherein the first virtual server (21) of the first physical server (16) acts as a backup to said virtual server (26) of the third physical server (18), and wherein the second virtual server (22) of the first physical server (16) acts as a backup to another virtual server (24) of the second physical server (17).

6. An apparatus as claimed in claim 5, wherein the output is configured to provide session information associated with a request to the first virtual server (21) and to the neighbouring virtual server (23) of the first virtual server.

7. An apparatus as claimed in any one of claims 5 to 6, wherein, in the event that a physical server is inoperable, each virtual server of the remaining physical servers has a neighbouring virtual server that is provided by a different other physical server.

8. An apparatus as claimed in any one of claims 5 to 6, wherein, in the event that a physical server is inoperable, two virtual servers of the remaining physical servers have neighbouring virtual servers that are provided by the same other physical server and any remaining virtual servers each have neighbouring virtual servers that are provided by different other physical servers.

9. A system (10) comprising a plurality of physical servers (16-18), the plurality of physical servers (16-18) comprising first, second and third physical servers (16-18), wherein each of said physical servers (16-18) comprises a plurality of virtual servers (21-26), wherein each virtual server (21-26) is associated with a neighbouring virtual server, wherein the neighbouring virtual server of each virtual server is part of a different other physical server, a first virtual server (21) of the first physical server (16) configured to act as a neighbouring virtual server of a second virtual server (26) of the third physical server (18), a second virtual server (22) of the first physical server (16) configured to act as a neighbouring virtual server of a second virtual server (24) of the second physical server (17), a first virtual server (23) of the second physical server (17) configured to act as a neighbouring virtual server of the first virtual server (21) of the first physical server (16), the second virtual server (24) of the second physical server (17) configured to act as a neighbouring virtual server of a first virtual server (25) of the third physical server (18), the first virtual server (25) of the third physical server (18) configured to act as a neighbouring virtual server of the first virtual server (23) of the second physical server (17), the second virtual server (26) of the third physical server (18) configured to act as a neighbouring virtual server of the second virtual server (22) of the first physical server (16), wherein the neighbouring virtual server of a virtual server is configured to act as a backup for that virtual server.

10. A system as claimed in claim 9, wherein, in the event that a physical server is inoperable, each virtual server of the remaining physical servers has a neighbouring virtual server that is provided by a different other physical server.

11. A system as claimed in claim 9, wherein, in the event that a physical server is inoperable, two virtual servers of the remaining physical servers have neighbouring virtual servers that are provided by the same other physical server and any remaining virtual servers each have neighbouring virtual servers that are provided by different other physical servers.

12. A system as claimed in any one of claims 9 to 11, further comprising a scheduler (12), wherein the scheduler comprises:

   an input for receiving a request;
   an output for forwarding said request to a first virtual server; and
   a processor for selecting said first virtual server.

13. A physical server (16) comprising a first virtual server (21) and a second virtual server (22), wherein the first virtual server (21) is configured to be backed up by a third virtual server (23) being part of a second physical server (17), and the second virtual server (22) is configured to be backed up by a fourth virtual server (26) being part of a third physical server (18), wherein the first virtual server (21) is further configured to act as a backup to the fourth virtual server (26) and wherein the second virtual server (22) is further configured to act as a backup to a fifth virtual server (24) being part of the second physical server (17), wherein the first, second and third physical servers are all different.

14. A computer program product comprising instructions which, when the program is executed by a computer, cause the computer to carry out the method according to any of claims 1 to 4.


**Patentansprüche**

1. Verfahren, Folgendes umfassend:

   Empfangen einer Anforderung;
   Auswählen eines ersten virtuellen Servers (21), um die Anforderung an denselben zu senden, wobei der erste virtuelle Server (21) von einem ersten physischen Server (16) aus mehreren physischen Servern (16, 17, 18) bereitgestellt ist, wobei jeder aus den mehreren physischen Servern (16, 17, 18) mehrere virtuelle Server (21-26) bereitstellt; und
   im Falle, dass der erste virtuelle Server (21) nicht fähig ist, die Anforderung zu empfangen, Weiterleiten der Anforderung an einen benachbarten virtuellen Sicherungsserver (23) des ersten virtuellen Servers (21), wobei der benachbarte virtuelle Sicherungsserver (23) des ersten virtuellen Servers (21) Teil eines zweiten physischen Servers (17) ist, der von dem ersten physischen Server (16) verschieden ist, wobei ein zweiter virtueller Server (22) des ersten physischen Servers (16) einen benachbarten virtuellen Sicherungsserver (26) aufweist, der durch einen dritten physischen Server (18) bereitgestellt ist, der von dem ersten und dem zweiten physischen Server (16, 17) verschieden ist, wobei der erste virtuelle Server (21) des ersten physischen Servers (16) als eine Sicherung des virtuellen Servers (26) des dritten physischen Servers (18) agiert und wobei der zweite virtuelle Server (22) des ersten physischen Servers (16) als eine Sicherung eines anderen virtuellen Servers (24) des zweiten physischen Servers (17) agiert.

2. Verfahren nach Anspruch 1, wobei im Falle, dass ein physischer Server nicht betriebsbereit ist, jeder virtuelle Server der verbleibenden physischen Server einen benachbarten virtuellen Server aufweist, der durch einen davon verschiedenen, anderen physischen Server bereitgestellt ist.

3. Verfahren nach Anspruch 1, wobei im Falle, dass ein physischer Server nicht betriebsbereit ist, zwei virtuelle Server aus den verbleibenden physischen Servern benachbarte virtuelle Server aufweisen, die von demselben anderen physischen Server bereitgestellt sind und jegliche verbleibende virtuelle Server jeweils benachbarte virtuelle Server aufweisen, die von davon verschiedenen, anderen physischen Servern bereitgestellt sind.

4. Verfahren nach einem der vorhergehenden Ansprüche, wobei Sitzungsinformationen, die mit einer Anforderung verbunden sind, an den ersten virtuellen Server (21) und an den benachbarten virtuellen Server (23) des ersten virtuellen Servers (21) gesendet werden.

5. Einrichtung (12), Folgendes umfassend:

eine Eingabe zum Empfangen einer Anforderung;
eine Ausgabe zum Weiterleiten der Anforderung an einen ersten virtuellen Server (21), wobei der erste virtuelle Server (21) durch einen ersten physischen Server (16) aus mehreren physischen Servern (16-18) bereitgestellt ist, und wobei jeder aus den mehreren physischen Servern (16-18) mehrere virtuelle Server (21-26) bereitstellt; und

einen Prozessor zum Auswählen des ersten virtuellen Servers (21), wobei im Falle eines Ausfalls des ersten virtuellen Servers (21) der Prozessor dazu ausgelegt ist, einen benachbarten virtuellen Sicherungsserver (23) des ersten virtuellen Servers (21) auszuwählen, und die Ausgabe des Schedulers dazu ausgelegt ist, die Anforderung an den benachbarten virtuellen Server (23) weiterzuleiten, der durch einen zweiten physischen Server (17), der von dem ersten physischen Server (16) verschieden ist, bereitgestellt ist, und wobei ein zweiter virtueller Server (22) des ersten physischen Servers (16) einen benachbarten virtuellen Sicherungsserver (26) aufweist, der von einem dritten physischen Server (18) bereitgestellt ist, der von dem ersten und dem zweiten physischen Server (16, 17) verschieden ist, wobei der erste virtuelle Server (21) des ersten physischen Servers (16) als eine Sicherung des virtuellen Servers (26) des dritten physischen Servers (18) agiert und wobei der zweite virtuelle Server (22) des ersten physischen Servers (16) als eine Sicherung eines anderen virtuellen Servers (24) des zweiten physischen Servers (17) agiert.

6. Einrichtung nach Anspruch 5, wobei die Ausgabe dazu ausgelegt ist, Sitzungsinformationen, die mit einer Anforderung an den ersten virtuellen Server (21) und an den benachbarten virtuellen Server (23) des ersten virtuellen Servers verbunden sind, bereitzustellen.

7. Einrichtung nach einem der vorhergehenden Ansprüche 5 bis 6, wobei im Falle, dass ein physischer Server nicht betriebsbereit ist, jeder virtuelle Server aus den verbleibenden physischen Servern einen benachbarten virtuellen Server aufweist, der durch einen davon verschiedenen, anderen physischen Server bereitgestellt ist.

8. Einrichtung nach einem der vorhergehenden Ansprüche 5 bis 6, wobei im Falle, dass ein physischer Server nicht betriebsbereit ist, zwei virtuelle Server aus den verbleibenden physischen Servern benachbarte virtuelle Server aufweisen, die von demselben anderen physischen Server bereitgestellt sind und jegliche verbleibende virtuelle Server jeweils benachbarte virtuelle Server aufweisen, die durch davon verschiedene, andere physische Server bereitgestellt sind.

9. System (10), umfassend mehrere physische Server (16-18), wobei die mehreren physischen Server (16-18) erste, zweite und dritte physische Server (16-18) umfassen, wobei jeder der physischen Server (16-18) mehrere virtuelle Server (21-26) umfasst, wobei jeder virtuelle Server (21-26) mit einem benachbarten virtuellen Server verbunden ist, wobei der benachbarte virtuelle Server jedes virtuellen Servers Teil eines davon verschiedenen, anderen physischen Servers ist, ein erster virtueller Server (21) des ersten physischen Servers (16) dazu ausgelegt ist, als ein benachbarter virtueller Server eines zweiten virtuellen Servers (26) des dritten physischen Servers (18) zu agieren, ein zweiter virtueller Server (22) des ersten physischen Servers (16) dazu ausgelegt ist, als ein benachbarter virtueller Server eines zweiten virtuellen Servers (24) des zweiten physischen Servers (17) zu agieren, ein erster virtueller Server (23) des zweiten physischen Servers (17) dazu ausgelegt ist, als ein benachbarter virtueller Server des ersten virtuellen Servers (21) des ersten physischen Servers (16) zu agieren, der zweite virtuelle Server (24) des zweiten physischen Servers (17) dazu ausgelegt ist, als ein benachbarter virtueller Server eines ersten virtuellen Servers (25) des dritten physischen Servers (18) zu agieren, der erste virtuelle Server (25) des dritten physischen Servers (18) dazu ausgelegt ist, als ein benachbarter virtueller Server des ersten virtuellen Servers (23) des zweiten physischen Servers (17) zu agieren, der zweite virtuelle Server (26) des dritten physischen Servers (18) dazu ausgelegt ist, als ein benachbarter virtueller Server des zweiten virtuellen Servers (22) des ersten physischen Servers (16) zu agieren,
wobei der benachbarte virtuelle Server eines virtuellen Servers dazu ausgelegt ist, als eine Sicherung für jenen virtuellen Server zu agieren.

**10.** System nach Anspruch 9, wobei im Falle, dass ein physischer Server nicht betriebsbereit ist, jeder virtuelle Server aus den verbleibenden physischen Servern einen benachbarten virtuellen Server aufweist, der von einem davon verschiedenen, anderen physischen Server bereitgestellt ist.

**11.** System nach Anspruch 9, wobei im Falle, dass ein physischer Server nicht betriebsbereit ist, zwei virtuelle Server aus den verbleibenden physischen Servern benachbarte virtuelle Server aufweisen, die durch denselben anderen physischen Server bereitgestellt sind und jegliche verbleibende virtuelle Server jeweils benachbarte virtuelle Server aufweisen, die von davon verschiedenen, anderen physischen Servern bereitgestellt sind.

**12.** System nach einem der vorhergehenden Ansprüche 9 bis 11, ferner umfassend einen Scheduler (12), wobei der Scheduler Folgendes umfasst:

eine Eingabe zum Empfangen einer Anforderung;
eine Ausgabe zum Weiterleiten der Anforderung an einen ersten virtuellen Server; und
einen Prozessor zum Auswählen des ersten virtuellen Servers.

**13.** Physischer Server (16), umfassend einen ersten virtuellen Server (21) und einen zweiten virtuellen Server (22),

wobei der erste virtuelle Server (21) dazu ausgelegt ist, von einem dritten virtuellen Server (23) gesichert zu werden, der Teil eines zweiten physischen Servers (17) ist, und der zweite virtuelle Server (22) dazu ausgelegt ist, von einem vierten virtuellen Server (26) gesichert zu werden, der Teil eines dritten physischen Servers (18) ist, wobei der erste virtuelle Server (21) ferner dazu ausgelegt ist, als eine Sicherung für den vierten virtuellen Server (26) zu agieren
und wobei der zweite virtuelle Server (22) ferner dazu ausgelegt ist, als eine Sicherung für einen fünften virtuellen Server (24) zu agieren, der Teil des zweiten physischen Servers (17) ist, wobei der erste, zweite und dritte physische Server alle voneinander verschieden sind.

**14.** Computerprogrammprodukt, umfassend Befehle, die, wenn das Programm von einem Computer ausgeführt wird, den Computer veranlassen, das Verfahren nach einem der Ansprüche 1 bis 4 auszuführen.

**Revendications**

**1.** Procédé comprenant :

la réception d'une requête ;
la sélection d'un premier serveur virtuel (21) pour lui transférer la requête, dans lequel le premier serveur virtuel (21) est constitué par un premier serveur physique (16) d'une pluralité de serveurs physiques (16, 17, 18), dans lequel chacun de ladite pluralité de serveurs physiques (16, 17, 18) constitue une pluralité de serveurs virtuels (21-26) ; et
dans l'éventualité où le premier serveur virtuel (21) ne dispose pas de la capacité de recevoir ladite requête, le transfert de la requête à un serveur virtuel voisin de secours (23) dudit premier serveur virtuel (21), dans lequel le serveur virtuel voisin de secours (23) du premier serveur virtuel (21) est une partie d'un deuxième serveur physique (17) qui est différent du premier serveur physique (16), dans lequel un deuxième serveur virtuel (22) du premier serveur physique (16) dispose d'un serveur virtuel voisin de secours (26) qui est constitué par un troisième serveur physique (18) qui est différent des premier et deuxième serveurs physiques (16, 17), dans lequel le premier serveur virtuel (21) du premier serveur physique (16) joue le rôle d'un secours pour ledit serveur virtuel (26) du troisième serveur physique (18), et dans lequel le deuxième serveur virtuel (22) du premier serveur physique (16) joue le rôle d'un secours pour un autre serveur virtuel (24) du deuxième serveur physique (17).

**2.** Procédé selon la revendication 1, dans lequel, dans l'éventualité où un serveur physique est non opérationnel, chaque serveur virtuel des serveurs physiques restants dispose d'un serveur virtuel voisin qui est constitué par un autre serveur physique différent.

**3.** Procédé selon la revendication 1, dans lequel, dans l'éventualité où un serveur physique est non opérationnel, deux serveurs virtuels des serveurs physiques restants disposent de serveurs virtuels voisins qui sont constitués par le même autre serveur physique, et de quelconques serveurs virtuels restants disposent chacun de serveurs virtuels voisins qui sont constitués par d'autres serveurs physiques différents.

**4.** Procédé selon l'une quelconque des revendications précédentes, dans lequel une information de session qui est associée à une requête est envoyée au premier serveur virtuel (21) et au serveur virtuel voisin (23) dudit premier serveur virtuel (21).

**5.** Appareil (12) comprenant :

une entrée pour recevoir une requête ;
une sortie pour transférer ladite requête à un premier serveur virtuel (21), dans lequel le premier serveur virtuel (21) est constitué par un premier serveur physique (16) d'une pluralité de serveurs physiques (16-18), et dans lequel chacun de ladite pluralité de serveurs physiques (16-18) constitue une pluralité de serveurs virtuels (21-26) ; et
un processeur pour sélectionner ledit premier serveur virtuel (21), dans lequel, dans l'éventualité d'une défaillance dudit premier serveur virtuel (21), le processeur est configuré de manière à ce qu'il sélectionne un serveur virtuel voisin de secours (23) du premier serveur virtuel (21), et la sortie du planificateur est configurée de manière à transférer ladite requête audit serveur virtuel voisin (23) qui est constitué par un deuxième serveur physique (17) qui est différent du premier serveur physique (16) ; et dans lequel :
un deuxième serveur virtuel (22) du premier serveur physique (16) dispose d'un serveur virtuel voisin de secours (26) qui est constitué par un troisième serveur physique (18) qui est différent des premier et deuxième serveurs physiques (16, 17), dans lequel le premier serveur virtuel (21) du premier serveur physique (16) joue le rôle d'un secours pour ledit serveur virtuel (26) du troisième serveur physique (18), et dans lequel le deuxième serveur virtuel (22) du premier serveur physique (16) joue le rôle d'un secours pour un autre serveur virtuel (24) du deuxième serveur physique (17).

**6.** Appareil selon la revendication 5, dans lequel la sortie est configurée de manière à ce qu'elle fournisse une information de session qui est associée à une requête sur le premier serveur virtuel (21) et sur le serveur virtuel voisin (23) du premier serveur virtuel.

**7.** Appareil selon l'une quelconque des revendications 5 et 6, dans lequel, dans l'éventualité où un serveur physique est non opérationnel, chaque serveur virtuel des serveurs physiques restants dispose d'un serveur virtuel voisin qui est constitué par un autre serveur physique différent.

**8.** Appareil selon l'une quelconque des revendications 5 et 6, dans lequel, dans l'éventualité où un serveur physique est non opérationnel, deux serveurs virtuels des serveurs physiques restants disposent de serveurs virtuels voisins qui sont constitués par le même autre serveur physique, et de quelconques serveurs virtuels restants disposent chacun de serveurs virtuels voisins qui sont constitués par d'autres serveurs physiques différents.

**9.** Système (10) comprenant une pluralité de serveurs physiques (16-18), la pluralité de serveurs physiques (16-18) comprenant des premier, deuxième et troisième serveurs physiques (16-18), dans lequel chacun desdits serveurs physiques (16-18) comprend une pluralité de serveurs virtuels (21-26), dans lequel chaque serveur virtuel (21-26) est associé à un serveur virtuel voisin ; dans lequel :
le serveur virtuel voisin de chaque serveur virtuel est une partie d'un autre serveur physique différent, un premier serveur virtuel (21) du premier serveur physique (16) est configuré pour jouer le rôle d'un serveur virtuel voisin d'un deuxième serveur virtuel (26) du troisième serveur physique (18), un deuxième serveur virtuel (22) du premier serveur physique (16) est configuré pour jouer le rôle d'un serveur virtuel voisin d'un deuxième serveur virtuel (24) du deuxième serveur physique (17), un premier serveur virtuel (23) du deuxième serveur physique (17) est configuré pour jouer le rôle d'un serveur virtuel voisin du premier serveur virtuel (21) du premier serveur physique (16), le deuxième serveur virtuel (24) du deuxième serveur physique (17) est configuré pour jouer le rôle d'un serveur virtuel voisin d'un premier serveur virtuel (25) du troisième serveur physique (18), le premier serveur virtuel (25) du troisième serveur physique (18) est configuré pour jouer le rôle d'un serveur virtuel voisin du premier serveur virtuel (23) du deuxième serveur physique (17), le deuxième serveur virtuel (26) du troisième serveur physique (18) est configuré pour jouer le rôle d'un serveur virtuel voisin du deuxième serveur virtuel (22) du premier serveur physique (16) ;
dans lequel :
le serveur virtuel voisin d'un serveur virtuel est configuré pour jouer le rôle d'un secours pour ce serveur virtuel.

10. Système selon la revendication 9, dans lequel, dans l'éventualité où un serveur physique est non opérationnel, chaque serveur virtuel des serveurs physiques restants dispose d'un serveur virtuel voisin qui est constitué par un autre serveur physique différent.

11. Système selon la revendication 9, dans lequel, dans l'éventualité où un serveur physique est non opérationnel, deux serveurs virtuels des serveurs physiques restants disposent de serveurs virtuels voisins qui sont constitués par le même autre serveur physique, et de quelconques serveurs virtuels restants disposent chacun de serveurs virtuels voisins qui sont constitués par d'autres serveurs physiques différents.

12. Système selon l'une quelconque des revendications 9 à 11, comprenant en outre un planificateur (12), dans lequel le planificateur comprend :

   une entrée pour recevoir une requête ;
   une sortie pour transférer ladite requête à un premier serveur virtuel ; et
   un processeur pour sélectionner ledit premier serveur virtuel.

13. Serveur physique (16) comprenant un premier serveur virtuel (21) et un deuxième serveur virtuel (22) ; dans lequel :
le premier serveur virtuel (21) est configuré de manière à ce qu'il soit secouru par un troisième serveur virtuel (23) qui est une partie d'un deuxième serveur physique (17), et le deuxième serveur virtuel (22) est configuré de manière à ce qu'il soit secouru par un quatrième serveur virtuel (26) qui est une partie d'un troisième serveur physique (18) ;
dans lequel :
le premier serveur virtuel (21) est en outre configuré pour jouer le rôle d'un secours pour le quatrième serveur virtuel (26) ; et dans lequel :
le deuxième serveur virtuel (22) est en outre configuré pour jouer le rôle d'un secours pour un cinquième serveur virtuel (24) qui est une partie du deuxième serveur physique (17), dans lequel les premier, deuxième et troisième serveurs physiques sont tous différents.

14. Progiciel comprenant des instructions qui, lorsque le programme est exécuté par un ordinateur, forcent l'ordinateur à mettre en oeuvre le procédé selon l'une quelconque des revendications 1 à 4.

Fig. 1

Fig. 2

21

26

23

22

25

24

20

Fig. 3

21

26

23

22

25

24

20'

Fig. 4

31

36

33

40

35

34

37

38

39

32

30

**Fig. 5**

31

36

33

40

35

34

37

38

39

32

30'

**Fig. 6**

Fig. 7

**EP 2 583 417 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009187090 B
- US 20040243650 A